# EUROPEAN PATENT SPECIFICATION

(11) **EP 1 576 813 B1**
(45) Date of publication and mention of the grant of the patent: **25.04.2007**
(21) Application number: 03772566.0
(22) Date of filing: 21.11.2003
(51) Int. Cl.: H04N 5/775, H04N 5/00, H04N 5/765

(54) **VIDEO VIEWING SYSTEM AND METHOD**
VIDEOSICHTSYSTEM UND VERFAHREN
SYSTEME ET PROCEDE DE VISUALISATION VIDEO

(30) Priority: 19.12.2002 EP 02080375
(43) Date of publication of application: 21.09.2005
(73) Proprietor: Koninklijke Philips Electronics N.V., 5621 BA Eindhoven (NL)
(72) Inventor: KANG, I-Chih, NL-5656 AA Eindhoven (NL); SNIJDER, Freddy, NL-5656 AA Eindhoven (NL); DE LANGE, Alphonsus, A., J., NL-5656 AA Eindhoven (NL)
(74) Representative: Groenendaal, Antonius W. M.
(86) International application number: PCT/IB2003/005463
(87) International publication number: WO 2004/057867

(56) References cited:
- WO-A-01/35405
- WO-A-01/50765
- US-A1- 2002 037 160
- US-A1- 2002 172 508

## Description

The invention relates to a video viewing system which supports time-shift viewing of a video stream.

PCT patent application WO99/33265 discloses a video viewing system which is capable of operating in a number of modes of operation, including a time shift mode, a live play mode and a pause mode. In the time-shift mode, an incoming video stream is recorded in a storage unit and in parallel therewith a significantly older (e.g. ten minutes older) part of the incoming stream is replayed to the output of the system from the storage unit. In the live play mode, the incoming stream is fed directly to the output without any significant delay. In the pause mode, the system outputs a still image, which is the last image output during preceding live play and simultaneously records the incoming video stream in the storage unit.

Video mode switching between the different modes is not described in WO99/33265. In principle, video mode switching could be achieved by restarting the video system each time when a video mode switch command is received, starting up data flows as required for the relevant mode. This, however, has the disadvantage that an interruption may occur in the video output signal, as a result of the need to fill the various pipe-lines in the system and to restart the decoding process, often starting from an arbitrary point of time in the incoming video stream which does not permit decoding to start immediately.

An alternative is to realize video mode switches by means of multiplexing. In this case, the video system keeps all tasks that need to be executed in any one of the modes (i.e. at least an input task, a recording task, a replay task and a decoding task) running in all modes. One or more multiplexers switch the sources of one or more of the tasks during a video mode switch. Because none of the tasks needs to be restarted, this potentially eliminates interruptions. However, it has the disadvantage that certain tasks keep running also when they are not needed. In a video system, in which the tasks are implemented as software tasks running on a general-purpose processor, the processor resources occupied by the tasks remain unavailable to other processes. In a hardware-implemented system, the hardware that performs the tasks continues to consume unnecessary power supply current.

European patent application No. 01203905.3 (unpublished at the priority date of the present application and assigned to the same assignee) describes a mechanism for dynamically reconfiguring networks of processes or tasks.

It is, inter alia, an object of the invention to provide a video display system which is capable of operating in several modes of operation including a time-shift mode, wherein video mode switching can be realized without significant interruption and a task not needed during a certain mode need not continue execution in that certain mode.

The video display system according to the invention is set forth in claim 1. FIFO (First In First Out) communication buffers with reassignable sources and destinations are used for communicating video streams between the input, decoding, recording and replay tasks. During a mode switch, dynamic reconfiguration is realized by reassigning the source or destination of a FIFO communication buffer. The other side of the FIFO communication buffer stays assigned to the same task before and after the mode switch. At the reassignment, video data may still be present in the FIFO communication buffer. The task that stays assigned to the FIFO communication buffer keeps on executing during the mode switch, as far as video data is available in the FIFO communication buffer. Thus, the use of FIFO communication buffers which remain active during the mode switch ensures that mode switching can be performed without interruption of the video streams and without requiring tasks to remain active if they are no longer needed after the mode switch. The resources used by such a task may be freed after the mode switch.

In an embodiment, dynamic reassignment involves detachment and subsequent attachment of respective sources or destinations of video streams to the communication buffer. Detachment and attachment occur in response to receiving a mode-switch command, but with delays until a subsequent boundary between closed Groups of Pictures has been detected in the detached and attached stream, respectively. A closed Group of Pictures in a video stream encodes a series of frames of video information that can be decoded without requiring access to frames outside the group. By delaying detachment and attachment, it is prevented that "orphaned" video data occurs in the communication buffer, which cannot be decoded and might give rise to interruptions in the decoding task.

These and other objects and advantageous aspects will be described with reference to the following Figures.
Figure 1 shows a video display system,
Figures 2a-c show task graphs during different video modes.

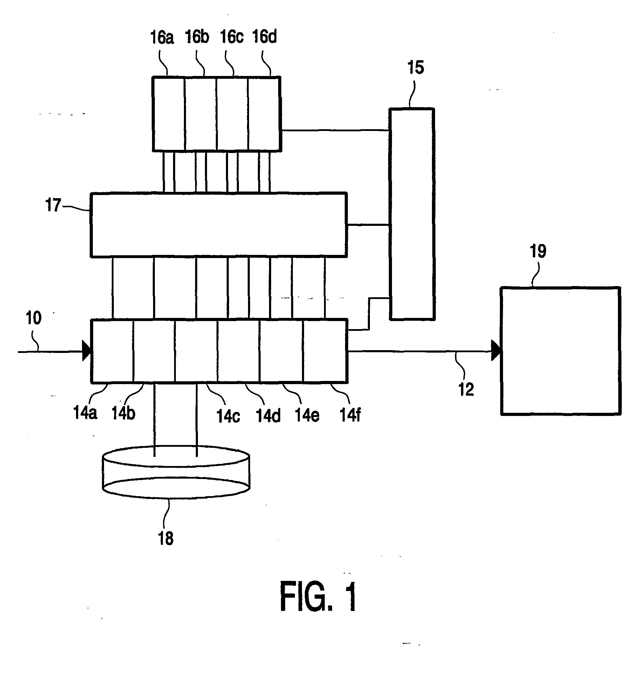

Figure 1 shows a video display system. The system contains a video stream input 10, a video stream output 12, a plurality of processing task elements 14a-f, a plurality of FIFO communication buffers 16a-d, a buffer connection element 17, a storage device 18 and a switching control unit 15. A video display device 19 is coupled to output 12. Processing task elements 14a-f include an input task element 14a, a recording task element 14b, a replay task element 14c, a decoder task element 14f plus optional further elements 14d,e. Input 10 is coupled to input task element 14a. Output 12 is coupled to decoder task element 14f. Storage device 18 is coupled to recording task element 14b and replay task element 14c. Processing task elements 14a-f are coupled to FIFO communication buffers 16a-d via buffer connection element 17. Switching control unit 15 is coupled to processing task elements 14a-f, FIFO communication buffers 16a-d and buffer connection element 17.

In a first embodiment, each component shown in Figure 1 is a dedicated hardware element. In other embodiments, one or more of the components may be implemented in a general purpose processor by means of suitable computer programs. For example, in the first embodiment, processing task elements 14a-f are each different hardware elements with a design dedicated to the task to be performed by the processing task element 14a-f, but in the other embodiments part or all of the processing task elements 14a-f may be implemented as different computer programs loaded in a general purpose processor. Similarly, in the first embodiment, FIFO communication buffers 16a-d are hardware FIFO buffers with data inputs, data outputs, and buffer full and empty signaling outputs. However, in the further embodiments, FIFO communication buffers 16a-d may be implemented as different buffer areas in a processor memory with appropriate software for signaling to task elements 14a-f whether or not the buffers are full or whether or not they are empty. Also similarly, in the first embodiment, buffer connection element 17 may be a hardware element such as a switch matrix and in the further embodiments buffer connection element 17 may be implemented as an interface program between FIFO communication buffers 16a-d and processing task elements 14a-f. Furthermore, switching control unit 15 may be implemented in hardware or as a software programmed computer.

In operation, an incoming video stream is applied to input 10 and an outgoing video stream is produced at output 12, for display at video display device 19. In between, processing task elements perform various processing tasks on video data that derives from the incoming stream.

Video mode control unit 15 controls the video mode in which the video viewing system operates. The combination of tasks executed depends on the video mode in which the system operates. The video modes include a live play mode, a pause mode and a time-shift mode.

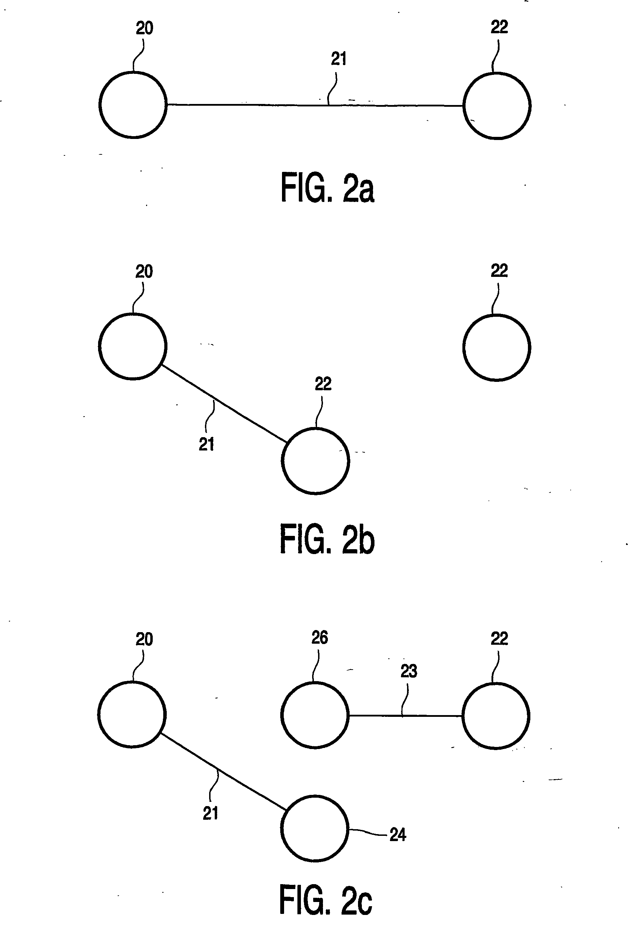

Figures 2a-c show task graphs of the processing in different video modes. Figure 2a shows operation in the live play mode, in an embodiment where the incoming stream is an analog video signal. In this case, an input task 20 is performed which receives the incoming stream and outputs an encoded stream to a decoding task 22 via a first connection 21. Decoding task 22 outputs a decoded stream for use by video display device 19 (not shown). Although a single decoding task 22 has been shown, it will be appreciated that the decoding task may in fact be comprised of several tasks, such as a demultiplexing task for demultiplexing a program from an MPEG transport stream, followed by a program decoding task operating on the demultiplexed program. Similarly separate video and audio stream processing tasks may occur. For reasons of simplicity, only a single task is shown.

Figure 2b shows operation in the pause mode. In this mode, a recorder task 24 has been added. Input task 20 continues to be performed and outputs the encoded stream to recorder task 24 via first connection 21. Recorder task 24 records the encoded stream in storage device 18 (not shown). Decoder task 22 has been switched to a "freeze" state, in which it permanently outputs its last received video frame, without reading from its input. Its input connection has been uncoupled. In an alternative embodiment, in which decoder task 22 is arranged to permanently output its last full received frame when it finds that no new frame has been supplied to its input, first connection 21 may be left connected to decoder task 22, a second connection being added between input task 20 and recording task 24. In this alternative embodiment, first connection 21 may be disconnected from input task 20.

Figure 2c shows operation in the time-shift mode. In this mode, the input task 20, the decoder task 22 and the recorder task 24 continue to be performed and a replay task 26 has been added. Input task 20 outputs the encoded stream to recorder task 24 via first connection 21. Replay task 26 outputs a delayed version of the input stream from storage device 18 (not shown) to decoder task 22 via a second connection 23. Decoder task 22 has been switched back to the normal operating state, in which it reads video data from its input and uses that data to update its output.

In the apparatus of Figure 1, tasks 20, 22, 24, 26 are executed by processing task elements 14a-c,f. Connections 21, 23 are implemented by FIFO communication buffers 16a-d. Tasks that are not required in a video mode are deactivated, for example, by disabling the clock input to the processing task element in the case of hardware-implemented task elements, or by releasing resources used by these tasks in the case of software-implemented task elements, thus releasing system resources for other uses.

When video mode control unit 15 switches the video display system between different video modes, the processing task elements 14a-c,f that are active before and after the mode switch are kept active (or at most suspended) through the mode switch, so that they will continue execution after the mode switch. The FIFO communication buffers 16a-d coupled to these continuously active processing task elements 14a-c,f also remain active, but video mode control unit 15 controls buffer connection element 17 so that the coupling to or from some of the inputs or outputs of FIFO communication buffers 16a-d are switched to different processing task elements 14a-c,f.

When a first one of processing task elements 14a-c,f has an input or output coupled, via a FIFO communication buffer 16a-d, to a second one of processing task elements 14a-c,f before the mode switch and to a third one of processing task elements 14a-c,f after the mode switch, the second one of the processing task elements 14a-c,f is decoupled from this FIFO communication buffer 16a-d and the third one is coupled to this FIFO communication buffer 16a-d in its place during the video mode switch. Video data in the FIFO communication buffer 16a-d is left in place for later use. The second one of processing task elements 14a-c,f is deactivated (or its execution suspended) before being decoupled and the third one is activated or unsuspended after being coupled (or, if activated earlier, it is supplied with a dummy "FIFO full" signal if its output is coupled to the FIFO communication buffer 16a-d or "FIFO empty" signal if its input is to be coupled). Thus, no data is lost during mode switching and there is no interruption of the video signals.

In the case of a switch from the live play mode of Figure 2a to the pause mode of Figure 2b, video mode switch control unit 15 sends a signal to the decoding task element 14f to switch to the "freeze" state of operation, causing it to repeat a current frame. Video mode switch control then disconnects the FIFO communication buffer 16a-d that implements connection 21 from decoding task element 14f and connects it to a recording task element 14b. Subsequently, video mode switch control unit 15 activates the recording task element 14b. - -

In the alternative embodiment, in which first connection 21 remains coupled to decoder task 22, video mode switch control unit 15 reconnects the output of input task element 14a to a second FIFO communication buffer 16a-d (optionally causing input task 20 to suspend operation during reconnection) and connects recording task element 14b to that second FIFO communication buffer 16a-d before activating recording task element 14b. In this embodiment, decoder task 22 does not have to be brought into a freeze state. This simplifies design, but it has the disadvantage that some delay may occur during video mode switching because buffered data from first connection 21 has to be processed before decoder task 22 outputs a frozen image.

In the case of a switch from the pause mode of Figure 2b to the time-shift mode of Figure 2c, video mode switch control unit 15 connects a replay task element 14c and the decoding task element 14f to a second FIFO communication buffer 16a-d that implements connection 23. Subsequently, video mode switch control unit 15 signals decoding task element 14f to return to the normal state of operation, in which it reads video data for new frames from second FIFO communication buffer 16a-d, and activates the replay task element 14b.In the alternative embodiment, wherein the first connection 21 remains attached to decoding task 22, no new connection needs to be added of course. In this case, video mode switch control unit 15 couples replay task element 14c to the FIFO communication buffer 16a-d that implements first connection 21 and activates replay task element 14c. No signal is needed to switch decoder task element 14f back to the normal operating state in this case.

In the case of a switch back from the time shift mode of Figure 2c to the live play mode of Figure 2a, video mode switch control unit 15 signals replay task element 14c to cease execution. Video mode switch control unit 15 commands recording task element 14b and replay task element 14c to cease execution. Then video mode switch control unit 15 reconnects the input of decoding task element 14f from the FIFO communication buffer 16a-d that is connected to replay task element 14c to the FIFO communication buffer 16a-d that implements first connection 21 to input task element 14a. Preferably, a signal is sent to switch decoder task element 14f to the "freeze" mode temporarily during reconnection. Afterwards, the FIFO communication buffer 16a-d implementing connection 23 may also be released and its contents discarded.

Alternatively, input task element 14a may be coupled to the input of the FIFO communication buffer 16a-d that couples replay task element 14c to decoder task element 14f in the time shift mode. However, this has the disadvantage that switching from time shift replay to live play occurs only with some delay, because decoder task element 14f has to read the old video data from the FIFO communication buffer 16a-d first.

In the alternative embodiment, wherein decoder task 22 remains coupled to first connection 21, video mode switch unit 15 reconnects the input of decoder task 22 to the FIFO communication buffer 16a-d that implements second connection 23. It will be seen that thus, through switching from the live play mode to the pause mode, to the time shift mode and back to the live play mode, a different one of FIFO communication buffers 16a-d is coupled to encoder task element 14f compared with the initial live play mode. This is a result of dynamic assignment of the FIFO communication buffers 16a-d.

It will be appreciated that in this way no restart of any processing task elements 14a-f is needed when the element is active both before and after the video mode switch. Processing task elements 14a-f that are no longer needed are deactivated, releasing system resources for other use. Continued use of FIFO communication buffers 16a-d before and after the video mode switch ensures continuity of the viewed video streams. It will also be appreciated that a similar implementation can be used for the reverse of the switches that have been described (i.e. switches from time shift mode to pause mode, from pause mode to live play mode and from live play mode to time shift mode).

Preferably, the processing task elements 14a-f are designed to select the point of time where they cease to be active dependent on the progress of the video data being processed, so that the part of the stream after ceasing can be decoded without reference to earlier video data. In an MPEG video signal, for example, 1-frames, P-frames and B-frames occur, the latter two types of frame being encoded as updates to other frames. Closed "Groups Of Pictures" (GOPs) are identified in the video stream, so that the frames in each particular GOP are never encoded as updates to frames outside that particular GOP.

In this case, when video mode control unit 15 signals to a processing task element 14a-f to suspend or cease operation as part of a video mode switch, the processing task element 14a-f finishes reading and/or writing of a GOP from or to a FIFO communication buffer 16a-d prior to actually ceasing or suspending operation. Thereupon the processing task element 14a-f signals back to video mode switch control unit 15 that the command has been executed. Subsequently, video mode switch control unit 15 signals buffer connection element 17 to couple the buffer or buffers involved to another processing task element 14a-f as required by the mode switch. After that, video mode control unit signals the newly connected processing task element 14a-f to start or resume execution.

FIFO communication buffers 16a-d preferably provide video data input, video data output and empty/full signaling. The data width is not relevant to the invention but typically multibit datawords will be written and read. Each FIFO communication buffer 16a-d provides a full/not full signal back to the processing task element 14a-f that supplies data to the buffer. If "full" is signaled and the processing task element 14a-f has data available, the processing task element 14a-f suspends execution. Each FIFO communication buffer 16a-d provides an empty/not empty signal to the processing task element 14a-f that reads data from the buffer. If "empty" is signaled and the processing task element 14a-f needs to read data, the processing task element 14a-f suspends execution. In the software implementation of processing task element 14a-f, the processing task element 14a-f may use polling of the empty and full signals to determine when to resume operation, or event signaling or interrupt signaling may be used to resume operation. In the hardware implementation, the empty and full signals may also be used as enable or disable signals.

FIFO communication buffers 16a-d may be implemented as memory areas in a computer memory, the FIFO operation being controlled by software (keeping a pointer to the oldest unread data and the free location next to last written data, checking for full and empty conditions and setting flags accordingly or signaling those flags to coupled processing task elements 14a-f). Dedicated hardware FIFO buffers may be used as well. Similarly, buffer connection element 17 may be implemented using software, in which case buffer connection element 17 may be integrated with FIFO communication buffers 16a-d in the form of pointers to processing task elements 14a-f to which respective FIFO communication buffers 16a-d are coupled. Alternatively, buffer connection element 17 may be integrated with processing task elements 14a-f in the form of pointers to FIFO communication buffers 16a-d to which respective processing task elements 14a-f are coupled. Mixtures of such pointer implementations are also possible.

It will be appreciated that the invention is not limited to the specific embodiments that have been described.

## Claims

1. A video viewing system, comprising:
- an input (10) for receiving an incoming video stream;
- an output (12) for outputting an outgoing video stream;
- a storage device (18) for storing video data;
- a plurality of FIFO communication buffers (16a-d);
- a processing system (14a-f, 15) arranged to execute a plurality of tasks, including an input task (20) coupled to the input, a decoding task (22) coupled to the output, a recording task (24) for recording on the storage device (18) and a replay task (26) for replaying from the storage device (18), the processing system (14a-f, 15) being switchable between a plurality of video modes, including a live play mode in which the input task (20) is coupled to the decoding task (22), a pause mode in which the input task (20) is coupled to the recording task (24), and a time-shift mode in which the input task (20) is coupled to the recording task (24) and the replay task (26) is coupled to the decoding task (20), the tasks being coupled via respective ones of the FIFO communication buffers (16a-d), the processing system (14a-f, 15) being arranged to switch between the video modes by reassigning connections of tasks (20, 22, 24, 26) to the respective ones of the FIFO communication buffers (16a-d), keeping previous video data in the reassigned FIFO communication buffers (16a-d), keeping tasks (20, 22, 24, 26) that are needed before and after a switch continuously active and ceasing execution of tasks that are not in use after the switch.

2. A video viewing system as claimed in claim 1, wherein the processing system (14a-f, 15) is arranged to send a "freeze" signal to the decoder task (22) upon a mode switch from the live play mode to the pause mode, to make the decoder task (22) enter a freeze state in which the decoder task (22) permanently outputs a current video frame.

3. A video viewing system as claimed in claim 2, wherein the input task (20) is coupled to the decoder task (22) via a first one of the FIFO communication buffers (16a-d) in the live play mode, the processing system (14a-f, 15) being arranged to decouple an input of the decoder task (22) from an output of the first one of the FIFO communication buffers (16a-d) upon switching from the live play mode to the pause mode, to couple an input of the recording task (24) to the output of the first one of the FIFO communication buffers (16a-d) and subsequently to activate the recording task (24).

4. A video viewing system as claimed in claim 3, wherein the processing system (14a-f, 15) is arranged to couple an output of the replay task (26) to an input of a second one of the FIFO communication buffers (16a-d) upon a video mode switch from the pause mode to the time-shift mode, to couple an input of the decoder task (22) to an output of the second one of the FIFO communication buffers (16a-d) and subsequently to activate the replay task (26), the decoder task (22) being switched back from the freeze state to a normal operating state.

5. A video viewing system as claimed in claim 1, wherein the input task (20) is coupled to the decoder task (22) via a first one of the FIFO communication buffers (16a-d) in the live play mode, the processing system (14a-f, 15) being arranged to couple a second one of the FIFO communication buffers (16a-d) between the input task (20) and the recording task (24) upon switching from the live play mode to the pause mode, an input of the first one of the FIFO communication buffers (16a-d) being disconnected from the input task (20) and an output of the first one of the FIFO communication buffers (16a-d) remaining coupled to an input of the decoder task (22).

6. A video viewing system as claimed in claim 1, wherein the input task (20) is coupled to the recording task (22) in the time shift mode via a first one of the FIFO communication buffers (16a-d), the processing system (14a-f, 15) being arranged to reconnect an input of the decoder task (22) to an output of the first one of the FIFO communication buffers (16a-d) upon a video mode switch from the time shift mode to the live play mode, deactivating the replay task (26) and the recording task (24).

7. A video viewing system as claimed in claim 1, wherein the input task (20) is coupled to the recording task (24) in the time shift mode via a first one of the FIFO communication buffers (16a-d), and the replay task is coupled to the decoder task via a second one of the FIFO communication buffers, the processing system (14a-f, 15) being arranged to deactivate the replay task (26), to deactivate the recording task (24), to couple a second one of the FIFO communication buffers (16a-d) to the input task and to release the first one of the FIFO communication buffers (16a-d) upon a switch from the time shift mode to the live play mode.

8. A video viewing system as claimed in claim 1, wherein each task (20, 22, 24, 26) that is deactivated upon mode switching is arranged to delay deactivation upon mode switching until it has processed a closed group of pictures and written or read that group to or from one of the FIFO communication buffers (16a-d).

9. A video viewing system as claimed in claim 1, wherein at least one of the replay task (26) and recording task (24) is implemented as a computer program running on a programmable computer, so that resources used by said at least one of the replay task (26) and recording task (24) are released in a video mode or modes when said at least one of the replay task (26) and recording task (24) is not active.

10. A video viewing system as claimed in claim 1, wherein at least one of the replay task (26) and recording task (24) is implemented in dedicated hardware, the dedicated hardware being switchable to a power-saving state, the dedicated hardware for said at least one of the replay task (26) and recording task (24) being released in a video mode or modes when said at least one of the replay task (26) and recording task (24) is not active.

11. A method of producing an outgoing video stream for viewing, wherein a plurality of tasks (20, 22, 24, 26) is executed, including an input task (20) receiving an incoming video stream, a decoding task (22) outputting the outgoing video stream, a recording task (24) recording on a storage device (18) and a replay task (26) replaying from the storage device (18),
the method comprising the steps of:
- switching between a plurality of video modes, different subsets of the tasks (20, 22, 24, 26) or all of the tasks (20, 22, 24, 26) being active in different ones of the modes, the video modes including a live play mode in which the input task (20) is coupled to the decoding task (22), a pause mode in which the input task (20) is coupled to the recording task (24), and a time-shift mode in which the input task (20) is coupled to the recording task (24) and the replay task (26) is coupled to the decoding task (22),
- using FIFO communication buffers (16a-d) to communicate between the tasks (20, 22, 24, 26), switching between the video modes being realized by reassigning connections of tasks (20, 22, 24, 26) to respective ones of the communication buffers (16a-d), keeping previous data in the reassigned FIFO communication buffers (16a-d), keeping tasks (20, 22, 24, 26) that are needed before and after a switch continuously active and ceasing execution of tasks (20, 22, 24, 26) that are not in use after the switch.

12. A computer program product comprising a program of computer instructions which when executed on a programmable computer performs the method of claim 11.

## Patentansprüche

1. Videosichtsystem, das Folgendes umfasst:
- einen Eingang (10) zum Empfangen eines eintreffenden Videostroms,
- einen Ausgang (12) zum Ausliefern eines ausgehenden Videostroms,
- eine Speicheranordnung (18) zur Speicherung von Videodaten,
- eine Anzahl FIFO Kommunikationspuffer (16a-d),
- ein Verarbeitungssystem (14a-f, 15) vorgesehen zum Durchführen einer Anzahl Aufgaben, mit einer Eingangsaufgabe (20), gekoppelt mit dem Eingang, einer Decodieraufgabe (22), gekoppelt mit dem Ausgang, einer Aufzeichnungsaufgabe (24) zum Aufzeichnen in der Speicheranordnung (18) und einer Wiedergabeaufgabe (26) zum Wiedergeben aus der Speicheranordnung (18), wobei das Verarbeitungssystem (14a-f, 15) zwischen einer Anzahl Videomoden umschaltbar ist, wobei diese Videomoden die folgenden Moden umfassen: eine Live-Wiedergabemode, in der die Eingangsaufgabe (20) mit der Decodieraufgabe (22) gekoppelt wird, eine Pausemode, in der die Eingangsaufgabe (20) mit der Aufzeichnungsaufgabe (24) gekoppelt wird, und eine Zeitverschiebungsmode, in der die Eingangsaufgabe (20) mit der Aufzeichnungsaufgabe (24) gekoppelt wird, und die Wiedergabeaufgabe (26) mit der Decodieraufgabe (22) gekoppelt wird, wobei die Aufgaben über betreffende Puffer der FIFO-Kommunikationspuffer (16a-d) gekoppelt sind, wobei das Verarbeitungssystem (14a-f, 15) dazu vorgesehen ist, zwischen den Videomoden umzuschalten durch Neuzuordnung von Verbindungen von Aufgaben (20, 22, 24, 26) mit den betreffenden Puffern der FIFO-Kommunikationspuffer (16a-d), wobei die vorhergehenden Videodaten in den neu zugeordneten FIFO-Kommunikationspuffern (16a-d) festgehalten werden, wobei die Aufgaben (20, 22, 24, 26), die vor und nach einer Umschaltung erforderlich sind, kontinuierlich aktiv gehalten werden und die Durchführung von Aufgaben, die nach der Umschaltung nicht mehr verwendet werden erden, eingestellt werden.

2. Videosichtsystem nach Anspruch 1, wobei das Verarbeitungssystem (14a-f, 15) dazu vorgesehen ist, ein "Gefrier"-Signal zu der Decoderaufgabe (22) zu senden, und zwar bei einer Modeumschaltung von der Live-Wiedergabemode in die Pausemode, damit die Decoderaufgabe (22) in einen Gefrierzustand eintreten kann, in dem die Decoderaufgabe (22) ständig ein aktuelles Videobild ausliefert.

3. Videosichtsystem nach Anspruch 2, wobei die Eingangsaufgabe (20) mit der Decoderaufgabe (22) über einen ersten Puffer der FIFO-Kommunikationspuffer (16a-d) in der Live-Wiedergabemode gekoppelt ist, wobei das Verarbeitungssystem (14a-f, 15) dazu vorgesehen ist, einen Eingang der Decoderaufgabe (22) von dem Ausgang des ersten Puffers der FIFO-Kommunikationspuffer (16a-d) los zu koppeln, und zwar bei Umschaltung aus der Live-Wiedergabemode in die Pausemode um einen Eingang der Aufzeichnungsaufgabe (24) mit dem Ausgang des ersten Puffers der FIFO-Kommunikationspuffer (16a-d) zu koppeln und danach die Aufzeichnungsaufgabe (24) zu aktivieren.

4. Videosichtsystem nach Anspruch 3, wobei das Verarbeitungssystem (14a-f, 15) dazu vorgesehen ist, einen Ausgang der Wiedergabeaufgabe (26) mit einem Eingang eines zweiten Puffers der FIFO-Kommunikationspuffer (16a-d) zu koppeln, und zwar bei einer Videomodeumschaltung von der Pausemode in die Zeitverschiebungsmode, um einen Eingang der Decoderaufgabe (22) mit einem Ausgang des zweiten Puffers der FIFO-Kommunikationspuffer (16a-d) zu koppeln und danach die Wiedergabeaufgabe (26) zu aktivieren, wobei die Decoderaufgabe (22) aus dem Gefrierzustand in einen normalen Betriebszustand zurück geschaltet wird.

5. Videosichtsystem nach Anspruch 1, wobei in der Live-Wiedergabemode die Eingangsaufgabe (20) über einen ersten Puffer der FIFO-Kommunikationspuffer (16a-d) mit der Decoderaufgabe (22) gekoppelt ist, wobei das Verarbeitungssystem (14a-f, 15) dazu vorgesehen ist, einen zweiten Puffer der FIFO-Kommunikationspuffer (16a-d) zwischen der Eingangsaufgabe (20) und der Aufzeichnungsaufgabe (24) zu koppeln, und zwar bei der Umschaltung aus der Live-Wiedergabemode in die Pausemode, wobei ein Eingang des ersten Puffers der FIFO-Kommunikationspuffer (16a-d) aus der Eingangsaufgabe (20) los gekoppelt wird und ein Ausgang des ersten Puffers der FIFO-Kommunikationspuffer (16a-d) nach wie vor mit einem Eingang der Decoderaufgabe (22) gekoppelt ist.

6. Videosichtsystem nach Anspruch 1, wobei in der Zeitverschiebungsmode die Eingangsaufgabe (20) über einen ersten Puffer der FIFO-Kommunikationspuffer (16a-d) mit der Aufzeichnungsaufgabe (22) gekoppelt ist, wobei das Verarbeitungssystem (14a-f, 15) dazu vorgesehen ist, bei einer Videomodeumschaltung aus der Zeitverschiebungsmode in die Live-Wiedergabemode einen Eingang der Decoderaufgabe (22) mit einem Ausgang des ersten Puffers der FIFO-Kommunikationspuffer (16a-d) neu zu verbinden, wobei die Wiedergabeaufgabe( 26) und die Aufzeichnungsaufgabe (24) deaktiviert werden.

7. Videosichtsystem nach Anspruch 1, wobei in der Zeitverschiebungsmode die Eingangsaufgabe (20) über einen ersten Puffer der FIFO-Kommunikationspuffer (16a-d) mit der Aufzeichnungsaufgabe (24) gekoppelt ist, und wobei die Wiedergabeaufgabe über einen zweiten Puffer der FIFO-Kommunikationspuffer mit der Decoderaufgabe gekoppelt ist, wobei das Verarbeitungssystem (14a-f, 15) dazu vorgesehen ist, die Wiedergabeaufgabe (26) zu deaktivieren, die Aufzeichnungsaufgabe (24) zu deaktivieren, einen zweiten Puffer der FIFO-Kommunikationspuffer (16a-d) mit der Eingangsaufgabe zu koppeln und bei einer Umschaltung aus der Zeitverschiebungsmode in die Live-Wiedergabemode den ersten Puffer der FIFO-Kommunikationspuffer (16a-d) frei zugeben.

8. Videosichtsystem nach Anspruch 1, wobei jede Aufgabe (20, 22, 24, 26) die bei Modeumschaltung deaktiviert wird, dazu vorgesehen ist, bei Modeumschaltung Deaktivierung zu verzögern bis das System eine geschlossene Gruppe von Bildern verarbeitet hat und diese Gruppe in einen der FIFO-Kommunikationspuffer (16a-d) eingeschrieben bzw. aus demselben ausgelesen hat.

9. Videosichtsystem nach Anspruch 1, wobei wenigstens eine Aufgabe der Wiedergabeaufgabe (26) und Aufzeichnungsaufgabe (24) als ein Computerprogramm implementiert ist, das in einem programmierbaren Computer läuft, so dass Mittel, die von wenigstens einer Aufgabe der Wiedergabeaufgabe (26) und der Aufzeichnungsaufgabe (24) verwendet werden, in einer Videomode oder Moden freigegeben werden, wenn die genannte wenigstens eine Aufgabe der Wiedergabeaufgabe (26) und Aufzeichnungsaufgabe (24) nicht aktiv ist.

10. Videosichtsystem nach Anspruch 1, wobei wenigstens eine Aufgabe der Wiedergabeaufgabe (26) und der Aufzeichnungsaufgabe (24) in Spezialhardware implementiert ist, wobei die Spezialhardware in einen Energiesparzustand geschaltet werden kann, wobei die Spezialhardware für die genannte wenigstens eine Aufgabe der Wiedergabeaufgabe (16) und Aufzeichnungsaufgabe (24) in einer Videomode oder Moden freigegeben wird, wenn die genannte wenigstens eine Aufgabe der Wiedergabeaufgabe (26) und Aufzeichnungsaufgabe (24) nicht aktiv ist.

11. Verfahren zum Erzeugen eines ausgehenden Videostroms zum Anschauen, wobei eine Anzahl Aufgaben (20, 22, 24, 26) durchgeführt wird, und zwar eine Eingangsaufgabe (20), wobei ein eintreffender Videostrom empfangen wird, eine Decodieraufgabe (22), wobei der ausgehende Videostrom ausgeliefert wird, eine Aufzeichnungsaufgabe (24), wobei in einer Speicheranordnung (18) aufgezeichnet wird, und eine Wiedergabeaufgabe (26), wobei aus der Speicheranordnung (18) wiedergegeben wird,
wobei das Verfahren die nachfolgenden Verfahrensschritte umfasst:
- das Umschalten zwischen einer Anzahl Videomoden, wobei verschiedene Untersätze der Aufgaben (20, 22, 24, 26) oder alle Aufgaben (20, 22, 24, 26) in verschiedenen Moden aktiv sind, wobei die Videomoden die nachfolgenden Moden umfassen: eine Live-Wiedergabemode, in der die Eingangsaufgabe (20) mit der Decodieraufgabe (22) gekoppelt ist, eine Pausemode, in der die Eingangsaufgabe (20) mit der Aufzeichnungsaufgabe (24) gekoppelt ist, und eine Zeitverschiebungsmode, in der die Eingangsaufgabe (20) mit der Aufzeichnungsaufgabe (24) und die Wiedergabeaufgabe (26) mit der Decodieraufgabe (22) gekoppelt ist,
- das Verwenden von FIFO-Kommunikationspuffern (16a-d) zum Kommunizieren zwischen den Aufgaben 20, 22, 24, 26), wobei das Umschalten zwischen den Videomoden durch Neuzuordnung von Verbindungen von Aufgaben (20, 22, 24, 26) mit betreffenden Puffern der Kommunikationspuffer (16a-d) verwirklicht wird, wobei vorhergehende Daten in den neu zugeordneten FIFO-Kommunikationspuffern (16a-d) festgehalten werden, wobei die Aufgaben (20, 22, 24, 26), die vor und nach einer Umschaltung erforderlich sind, ständig aktiv gehalten werden und die Durchführung von Aufgaben (20, 22, 24, 26), die nach der Umschaltung nicht verwendet werden, eingestellt werden.

12. Computerprogrammprodukt mit einem Programm mit Computerinstruktionen, das, wenn in einem programmierbaren Computer durchgeführt, das Verfahren nach Anspruch 11 durchführt.

## Revendications

1. Système de visualisation vidéo, comprenant:
- une entrée (10) pour recevoir un train vidéo d'entrée;
- une sortie (12) pour transmettre un train vidéo de sortie;
- un dispositif de stockage (18) pour stocker des données vidéo;
- une pluralité de tampons de communication FIFO (16a à d);
- un système de traitement (14a à f, 15) qui est agencé de manière à exécuter une pluralité de tâches y compris une tâche d'entrée (20) qui est couplée à l'entrée, une tâche de décodage (22) qui est couplée à la sortie, une tâche d'enregistrement (24) pour enregistrer sur le dispositif de stockage (18) et une tâche de reproduction (26) pour reproduire à partir du dispositif de stockage (18), le système de traitement (14a à f, 15) étant commutable entre une pluralité de modes vidéo y compris un mode de phase de jeu dans lequel la tâche d'entrée (20) est couplée à la tâche de décodage (22), un mode de pause dans lequel la tâche d'entrée (20) est couplée à la tâche d'enregistrement (24) et un mode de décalage de temps dans lequel la tâche d'entrée (20) est couplée à la tâche d'enregistrement (24) et la tâche de reproduction (26) est couplée à la tâche de décodage (20), les tâches étant couplées par le biais de tampons respectifs des tampons de communication FIFO (16a à d), le système de traitement (14a à f, 15) étant agencé de manière à commuter entre les modes vidéo par réassignation des connexions des tâches (20, 22, 24, 26) aux tampons respectifs des tampons de communication FIFO (16a à d), maintenant les données vidéo précédentes dans les tampons réassignés de communication FIFO (16a à d), maintenant les tâches (20, 22, 24, 26) qui sont nécessaires avant et après une commutation continûment actives et cessant l'exécution de tâches qui ne sont pas en usage après la commutation.

2. Système de visualisation vidéo selon la revendication 1, dans lequel le système de traitement (14a à f, 15) est agencé de manière à envoyer un signal de "congélation" à la tâche de décodage (22) dans le cas d'une commutation de mode à partir du mode de phase de jeu au mode de pause pour faire entrer la tâche de décodage (22) dans un état de congélation dans lequel la tâche de décodage (22) transmet en permanence une trame vidéo actuelle.

3. Système de visualisation vidéo selon la revendication 2, dans lequel la tâche d'entrée (20) est couplée à la tâche de décodage (22) par le biais d'un premier des tampons de communication FIFO (16a à d) dans le mode de phase de jeu, le système de traitement (14a à f, 15) étant agencé de manière à découpler une entrée de la tâche de décodage (22) d'une sortie du premier des tampons de communication FIFO (16a à d) dans le cas d'une commutation à partir du mode de phase de jeu au mode de pause pour coupler une entrée de la tâche d'enregistrement (24) à la sortie du premier des tampons de communication FIFO (16a à d) et ensuite pour activer la tâche d'enregistrement (24).

4. Système de visualisation vidéo selon la revendication 3, dans lequel le système de traitement (14a à f, 15) est agencé de manière à coupler une sortie de la tâche de reproduction (26) à une entrée d'un deuxième des tampons de communication FIFO (16a à d) dans le cas d'une commutation de mode vidéo à partir du mode de pause au mode de décalage de temps pour coupler une entrée de la tâche de décodage (22) à une sortie du deuxième des tampons de communication FIFO (16a à d) et ensuite pour activer la tâche de reproduction (26), la tâche de décodage (22) étant recommutée à partir de l'état de congélation à un état normal de fonctionnement.

5. Système de visualisation vidéo selon la revendication 1, dans lequel la tâche d'entrée (20) est couplée à la tâche de décodage (22) par le biais d'un premier des tampons de communication FIFO (16a à d) dans le mode de phase de jeu, le système de traitement (14a à f, 15) étant agencé de manière à coupler un deuxième des tampons de communication FIFO (16a à d) entre la tâche d'entrée (20) et la tâche d'enregistrement (24) dans le cas d'une commutation à partir du mode de phase de jeu au mode de pause, une entrée du premier des tampons de communication FIFO (16a à d) étant déconnectée de la tâche d'entrée (20) et une sortie du premier des tampons de communication FIFO (16a à d) restant couplée à une entrée de la tâche de décodage (22).

6. Système de visualisation vidéo selon la revendication 1, dans lequel la tâche d'entrée (20) est couplée à la tâche d'enregistrement (22) dans le mode de décalage de temps par le biais d'un premier des tampons de communication FIFO (16a à d), le système de traitement (14a à f, 15) étant agencé de manière à reconnecter une entrée de la tâche de décodage (22) à une sortie du premier des tampons de communication FIFO (16a à d) dans le cas d'une commutation de mode vidéo à partir du mode de décalage de temps au mode de phase de jeu, désactivant la tâche de reproduction (26) et la tâche d'enregistrement (24).

7. Système de visualisation vidéo selon la revendication 1, dans lequel la tâche d'entrée (20) est couplée à la tâche d'enregistrement (24) dans le mode de décalage de temps par le biais d'un premier des tampons de communication FIFO (16a à d) et la tâche de reproduction est couplée à la tâche de décodage par le biais d'un deuxième des tampons de communication FIFO, le système de traitement (14a à f, 15) étant agencé de manière à désactiver la tâche de reproduction (26), à désactiver la tâche d'enregistrement (24), à coupler un deuxième des tampons de communication FIFO (16a à d) à la tâche d'entrée et à dégager le premier des tampons de communication FIFO (16a à d) dans le cas d'une commutation à partir du mode de décalage de temps au mode de phase de jeu.

8. Système de visualisation vidéo selon la revendication 1, dans lequel chaque tâche (20, 22, 24, 26) qui est désactivée dans le cas d'une commutation de mode est agencée de manière à retarder la désactivation dans le cas d'une commutation de mode jusqu'à ce qu'elle ait traité un groupe fermé d'images et ait écrit et lu ce groupe dans ou à partir d'un des tampons de communication FIFO (16a à d).

9. Système de visualisation vidéo selon la revendication 1, dans lequel au moins une de la tâche de reproduction (26) et de la tâche d'enregistrement (24) est mise en oeuvre en tant qu'un programme d'ordinateur fonctionnant sur un ordinateur programmable, de sorte que les ressources qui sont utilisées par ladite au moins une tâche de reproduction (26) et de la tâche d'enregistrement (24) sont dégagées dans un mode ou dans des modes vidéo lorsque ladite au moins une de la tâche de reproduction (26) et de la tâche d'enregistrement (24) n'est pas active.

10. Système de visualisation vidéo selon la revendication 1, dans lequel au moins une de la tâche de reproduction (26) et de la tâche d'enregistrement (24) est mise en oeuvre dans le matériel spécialisé, le matériel spécialisé étant commutable à un état d'économie d'énergie, le matériel spécialisé pour ladite au moins une de la tâche de reproduction (26) et de la tâche d'enregistrement (24) étant dégagé dans un mode ou des modes vidéo lorsque ladite au moins une de la tâche de reproduction (26) et de la tâche d'enregistrement (24) n'est pas active.

11. Procédé de production d'un train vidéo de sortie pour la visualisation, dans lequel il est exécuté une pluralité de tâches (20, 22, 24, 26) y compris une tâche d'entrée (20) recevant un train vidéo d'entrée, une tâche de décodage (22) transmettant le train vidéo de sortie, une tâche d'enregistrement (24) enregistrant sur un dispositif de stockage (18) et une tâche de reproduction (26) reproduisant à partir du dispositif de stockage (18),
le procédé comprenant les étapes consistant à:
- commuter entre une pluralité de modes vidéo les sous-ensembles différents des tâches (20, 22, 24, 26) ou toutes les tâches (20, 22, 24, 26) étant actives dans les différents des modes, les modes vidéo incluant un mode de phase de jeu dans lequel la tâche d'entrée (20) est couplée à la tâche de décodage (22), un mode de pause dans lequel la tâche d'entrée (20) est couplée à la tâche d'enregistrement (24) et un mode de décalage de temps dans lequel la tâche d'entrée (20) est couplée à la tâche d'enregistrement (24) et la tâche de reproduction (26) est couplée à la tâche de décodage (22),
- utiliser les tampons de communication FIFO (16a à d) pour communiquer entre les tâches (20, 22, 24, 26), commuter entre les modes vidéo étant réalisés par réassignation des connexions des tâches (20, 22, 24, 26) aux tampons respectifs des tampons de communication FIFO (16a à d), maintenir les données vidéo précédentes dans les tampons réassignés de communication FIFO (16a à d), maintenir continûment actives les tâches (20, 22, 24, 26) qui sont nécessaires avant et après une commutation et cesser l'exécution des tâches (20, 22, 24, 26) qui ne sont pas en usage après la commutation.

12. Produit de programme informatique comprenant un programme d'instructions informatiques qui, dans le cas d'être exécuté sur un ordinateur programmable, réalise le procédé de la revendication 11.
